# EUROPÄISCHE PATENTSCHRIFT

(11) **EP 3 188 928 B1**
(45) Veröffentlichungstag und Bekanntmachung des Hinweises auf die Patenterteilung: **01.01.2020**
(21) Anmeldenummer: 15750772.4
(22) Anmeldetag: 19.08.2015
(51) Int. Cl.: B60N 2/427, B60N 2/42, B60N 2/16, B60N 2/02

(54) **DEFORMATIONSELEMENT FÜR EINEN KRAFTFAHRZEUGSITZ**
DEFORMATION ELEMENT FOR AN AUTOMOTIVE VEHICLE SEAT
ÉLÉMENT DE DÉFORMATION POUR SIÈGE DE VÉHICULE AUTOMOBILE

(30) Priorität: 02.09.2014 DE 102014217506
(43) Veröffentlichungstag der Anmeldung: 12.07.2017
(73) Patentinhaber: Brose Fahrzeugteile GmbH & Co. KG, Coburg, 96450 Coburg (DE)
(72) Erfinder: KOSTIN, Sergej, 96450 Coburg (DE)
(74) Vertreter: Maikowski & Ninnemann Patentanwälte Partnerschaft mbB
(86) Internationale Anmeldenummer: PCT/EP2015/068996
(87) Internationale Veröffentlichungsnummer: WO 2016/034412

(56) Entgegenhaltungen:
- WO-A2-2008/017794
- DE-A1-102010 029 129
- JP-A- 2008 222 021

## Beschreibung

Die Erfindung betrifft eine Sitzbaugruppe für einen Kraftfahrzeugsitz mit einem Deformationselement nach dem Oberbegriff des Anspruchs 1.

Ein Deformationselement einer derartigen Sitzbaugruppe umfasst einen Grundkörper sowie einen an dem Grundkörper ausgebildeten Deformationsabschnitt, an dem das Deformationselement bei Einwirkung einer äußeren Kraft deformierbar und/oder zerstörbar ist, und weiterhin einen Krafteinleitungsbereich, über den ein Bauelement eines Kraftfahrzeugsitzes mit dem Deformationsabschnitt in Wirkverbindung bringbar ist, so dass an dem besagten Bauelement (als Folge eines Unfalls) wirkende Kräfte in den Deformationsabschnitt des Deformationselementes einleitbar sind.

Mit einem solchen Deformationselement kann einerseits in einem Crash-Fall kinetische Energie abgebaut bzw. genauer in solche Energieformen umgewandelt werden, die bei der Deformation und/oder Zerstörung des Deformationsabschnittes des Deformationselementes erzeugt werden, insbesondere Wärme und Deformationsenergie. Weiterhin kann durch Verformung bzw. Zerstörung des Deformationsabschnittes gezielt eine begrenzte Bewegung einer ersten Sitzbaugruppe, beispielsweise einer Sitzlehne, bezüglich einer zweiten Sitzbaugruppe, beispielsweise des Sitzuntergestells, herbeigeführt werden. Durch die Umwandlung kinetischer Energie in andere Energieformen sowie durch eine gezielt gesteuerte Bewegbarkeit z.B. der Sitzlehne bezüglich des Sitzuntergestells in einem Crash-Fall lässt sich das Verletzungsrisiko eines auf dem entsprechenden Kraftfahrzeugsitz befindlichen Fahrzeuginsassen erheblich reduzieren. Dies gilt insbesondere für das Risiko von Verletzungen im Hals- und Nackenbereich bei Auffahrunfällen ("Heck-Crash") oder im Falle eines Abkommens von der Straße ("Run-off-Road Crash").

Eine gattungsgemäße Sitzbaugruppe eines Kraftfahrzeugsitzes mit einem Deformationselement ist aus der JP 2008 222021 A bekannt. Weitere Sitzbaugruppen mit Deformationselement sind in der WO 2008/017794 A2 und der DE 10 2010 029 129 A1 beschrieben.

In der EP 2 674 322 A1 ist ein Kraftfahrzeugsitz mit einem Deformationselement beschrieben, das zu den vorgenannten Zwecken einsetzbar ist. Dabei ist der Deformationsbereich einstückig am Grundkörper des Deformationselementes geformt und weist gegenüber diesem eine geringere Dicke auf.

Der Erfindung liegt das Problem zugrunde, eine Sitzbaugruppe mit einem Deformationselement der eingangs genannten Art zu schaffen, das sich bei einfacher Herstellbarkeit dadurch auszeichnet, dass hiermit in einem Crash-Fall zuverlässig kinetische Energie abbaubar ist.

Dieses Problem wird erfindungsgemäß durch die Schaffung einer Sitzbaugruppe mit einem Deformationselement mit den Merkmalen des Anspruchs 1 gelöst.

Danach ist der Deformationsabschnitt des Deformationselementes durch abschnittsweises Umformen des Materials des Deformationselementes gebildet, derart, dass am Übergang des Deformationsabschnittes zum Grundkörper des Deformationselementes ein Schwächungsbereich vorliegt, der mindestens eine Reißlinie definiert, entlang der das Deformationselement bei Einwirkung einer äußeren Kraft bevorzugt aufreißt. Das Umformen kann insbesondere unter Druckeinwirkung, z. B. durch Scherschneiden (Stanzen), erfolgen.

Weiterhin ist der Grundkörper des Deformationselementes stoffschlüssig, insbesondere durch Schweißen bzw. Laserschweißen, an einem Trägerbauteil befestigt, gemeinsam mit welchem das Deformationselement am Kraftfahrzeugitz festgelegt wird. Hierdurch lässt sich der Grundkörper des Deformationselementes gezielt verstärken, um sicherzustellen, dass bei Einleitung von Crash-Kräften in das Deformationselement dieses gezielt im Deformationsabschnitt und nicht außerhalb des Deformationsabschnittes verformt wird.

Die erfindungsgemäße Lösung ermöglicht in einfacher Weise die Ausbildung eines Deformationsabschnittes an einem Deformationselement durch Einwirkung auf den Grundkörper des Deformationselementes mit einem geeigneten Werkzeug, wie z. B. einem Stempel. So lässt sich z.B. aus einem Metallteil, gegebenenfalls einem Blechteil, kostengünstig ein zuverlässig funktionierendes Deformationselement, insbesondere in Form eines einfachen Stanzteiles, herstellen. Das Deformationselement lässt sich zudem platzsparend auslegen und dadurch in enge Räume integrieren. Weiterhin können hiermit Leichtbauanforderungen erfüllt werden.

Das Deformationselement ist dabei in eine Sitzverstelleinrichtung, wie z.B. eine Sitzhöhenverstellung, integriert.

Als Material für das Deformationselement eigenen sich beispielsweise (warm- oder kaltgewalzte) Bandstähle. Aufgrund der unterschiedlichen mechanischen Eigenschaften von Stählen unterschiedlicher Güte lässt sich durch die Wahl eines bestimmten Stahles als Material für das Deformationselement das Niveau der hiermit abbaubaren Crashenergie beeinflussen.

Die Bildung des Deformationsabschnittes durch abschnittsweises Umformen des Deformationselementes kann in der Weise erfolgen, dass als Resultat des Umformprozesses, z. B. eines Stanzprozesses, der Deformationsabschnitt mit dem Grundkörper des Deformationselementes zumindest teilweise (z.B. außerhalb des Krafteinleitungsbereiches) über einen Verbindungsbereich verbunden ist, dessen Dicke geringer ist als die Dicke des Deformationsabschnittes außerhalb jenes Verbindungsbereiches (in welchem der Deformationsabschnitt in den Grundkörper des Deformationselementes übergeht). Der Verbindungsbereich bildet somit den Schwächungsbereich, entlang dem das Deformationselement bei Einwirkung einer äußeren Kraft bevorzugt aufreißt. Unter der Dicke des Deformationsabschnittes bzw. des Verbindungsbereiches wird dabei die Ausdehnung quer zu der Fläche verstanden, entlang der sich das Deformationselement erstreckt. Der Verbindungsbereich kann insbesondere durch eine Scherkante gebildet werden. Ferner kann der Deformationsabschnitt quer zu der Fläche, entlang der sich das Deformationselement erstreckt, über dessen Grundkörper hinaus ragen.

Der Grundkörper des Deformationselementes einerseits und dessen Deformationsabschnitt andererseits können vorliegend im Wesentlichen die gleiche Dicke aufweisen.

Die stoffschlüssige Verbindung des Grundkörpers des Deformationselementes mit dem Trägerbauteil kann insbesondere in der Weise erfolgen, dass der Grundkörper einerseits und das Trägerbauteil andererseits entlang ihres jeweiligen (umlaufenden) äußeren Randes stoffschlüssig miteinander verbunden sind. Bei Herstellung der stoffschlüssigen Verbindung durch Schweißen bzw. Laserschweißen bedeutet dies, dass die Schweißnaht zumindest abschnittsweise entlang sowohl des äußeren Randes des Grundkörpers als auch des Trägerbauteiles verläuft und so der äußere Rand des Grundkörpers einerseits und der äußere Rand des Trägerbauteiles andererseits über jene Naht unmittelbar miteinander verbunden sind.

Das Trägerbauteil ist vorzugsweise derart ausgeführt, dass es einerseits den Grundkörper des Deformationselementes überdeckt und andererseits eine Durchgangsöffnung aufweist, die sich entlang des Deformationsabschnittes des Deformationselementes erstreckt. D. h., das Trägerbauteil verstärkt gezielt den Grundkörper des Deformationselementes, ohne aber die Funktion des Deformationsabschnittes zu beeinträchtigen.

Damit an dem mit dem Deformationselement gekoppelten Bauelement wirkende Crash-Kräfte gezielt in den Deformationsabschnitt eingeleitet werden können, ist der Kraftübertragungsbereich, über den jenes Bauelement mit dem Deformationselement zusammenwirkt, vorteilhaft unmittelbar angrenzend an den Deformationsabschnitt angeordnet.

Der Kraftübertragungsbereich kann beispielsweise als eine Öffnung ausgeführt sein, in die ein Sitzelement z. B. über einen Bolzen eingreifen kann.

Weitere Einzelheiten und Vorteile der Erfindung werden bei der nachfolgenden Beschreibung eines Ausführungsbeispieles anhand der Figuren deutlich werden.

Es zeigen:
- Fig. 1A: eine perspektivische Darstellung einer Sitzverstelleinrichtung für einen Kraftfahrzeugsitz;
- Fig. 1B: eine Explosionsdarstellung der Sitzverstelleinrichtung aus Figur 1A;
- Fig. 2A: eine erste perspektivische Ansicht einer Baugruppe der Sitzverstelleinrichtung aus den Figuren 1A und 1B mit einem integrierten Deformationselement;
- Fig. 2B: eine zweite perspektivische Ansicht der Baugruppe aus Figur 2A;
- Fig. 2C: eine Explosionsdarstellung der Baugruppe aus den Figuren 2A und 2B;
- Fig. 3A: eine erste perspektivische Ansicht des Deformationselementes aus den Figuren 2A bis 2C;
- Fig. 3B: eine zweite perspektivische Ansicht des Deformationselementes aus den Figuren 2A bis 2C;
- Fig. 3C: eine Explosionsdarstellung des Deformationselementes aus den Figuren 2A und 2B;
- Fig. 4A: eine Draufsicht auf das Deformationselement aus den Figuren 3A bis 3C;
- Fig. 4B: einen Querschnitt durch die Darstellung der Figur 4A;
- Fig. 5A: eine Ansicht der Baugruppe aus den Figuren 2A bis 2C mit Pfeilen, welche mögliche Richtungen der in einem Crash-Fall auftretenden Kräfte angeben;
- Fig. 5B: eine Rückansicht der Baugruppe aus Figur 5A;
- Fig. 5C: einen Querschnitt durch Figur 5B;
- Fig. 6A: ein weiteres Ausführungsbeispiel eines Deformationselementes;
- Fig. 6B: das Deformationselement aus Figur 6A an einem Lehnenbauteil eines Kraftfahrzeugs.

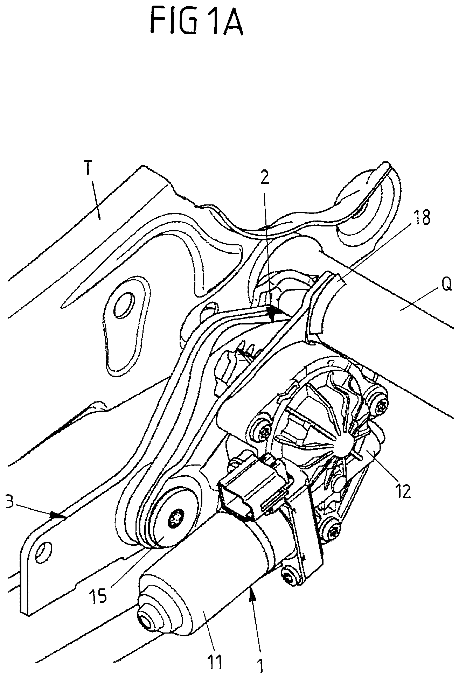

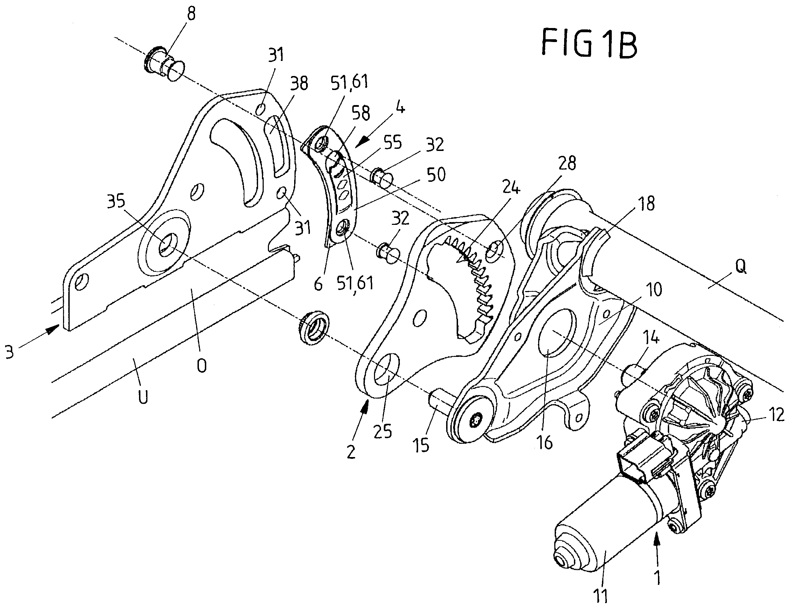

In den Figuren 1A und 1B ist einerseits perspektivisch und andererseits in einer Explosionsdarstellung eine Sitzverstelleinrichtung für einen Kraftfahrzeugsitz dargestellt, mit dem sich ein Querrohr Q eines Kraftfahrzeugsitzes - und damit auch die mit dem Querrohr Q verbundenen Sitzbaugruppen, wie z. B. ein Sitz- bzw. Polsterträger T - bezüglich des Fahrzeugbodens bzw. einer hierauf angeordneten Schienenlängsführung O, U verstellen lassen. Die Schienenlängsführung O, U umfasst eine bodenseitige Führungsschiene (Unterschiene U), die am Boden eines Kraftfahrzeugs festgelegt wird, sowie eine hierauf längsbeweglich geführte Oberschiene O. Hiermit lässt sich die Position eines Fahrzeugsitzes in Erstreckungsrichtung der Schienenlängsführung O, U einstellen.

Die in den Figuren 1A und 1B dargestellte Sitzverstelleinrichtung, mit der die Lage des Querrohres Q bezüglich der Schienenlängsführung O, U einstellbar ist, ist als eine Höhenverstellung ausgeführt. D. h., hiermit lässt sich insbesondere der Abstand des Querrohres Q von der Schienenlängsführung O, U quer zum Fahrzeugboden einstellen.

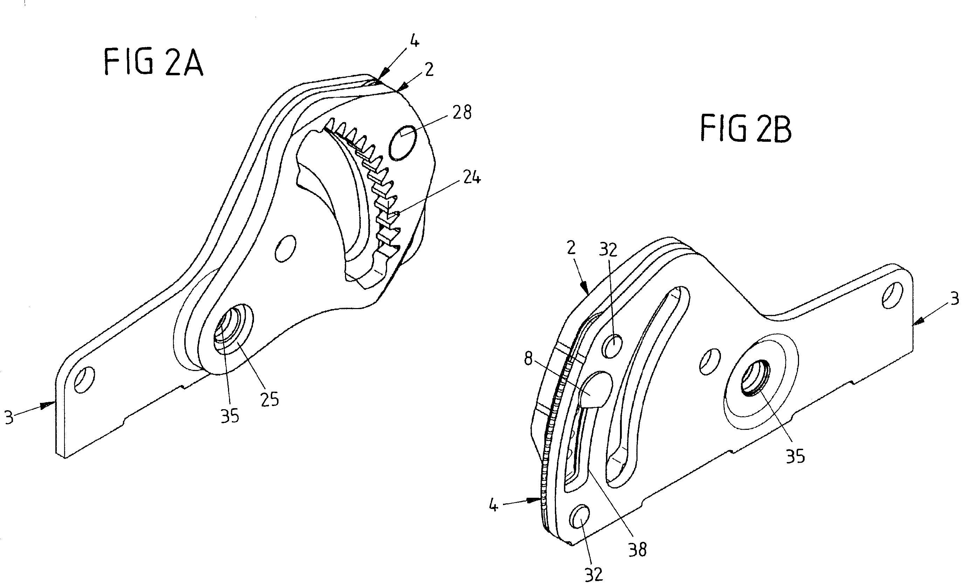

Eine Baugruppe der Sitzverstelleinrichtung aus den Figuren 1A und 1B ist außerdem in den Figuren 2A bis 2C einerseits in zwei perspektivischen Ansichten und andererseits in einer Explosionsdarstellung gezeigt. Hierauf wird nachfolgend ergänzend zu den Figuren 1A und 1B Bezug genommen werden.

Die Sitzverstelleinrichtung aus den Figuren 1A und 1B umfasst eine Antriebsbaugruppe 1 mit einem Antriebsmotor 11 und einem hiervon angetriebenen Verstellgetriebe 12, das abtriebsseitig ein Verstellteil 14 in Form eines Zahnrades (Ritzel) aufweist. Der Antriebsmotor 11 und das Verstellgetriebe 12 sind auf einem Antriebsträger 10 der Antriebsbaugruppe 1 angeordnet.

Der Antriebsträger 10 und damit die Antriebsbaugruppe 1 insgesamt ist (über ein Lagerelement 15, hier in Form eines Lagerbolzens) schwenkbar an der Schienenlängsführung O, U gelagert, bzw. genauer an einem an der Oberschiene O der Schienenlängsführung O, U angeordneten Bauelement in Form eines Lagerbauteiles 3. Das Lagerbauteil 3 weist hierfür eine Lagerstelle 35, im Ausführungsbeispiel in Form einer Lageröffnung, auf, mit der das antriebsbaugruppenseitigen Lagerelement 15 in Eingriff bringbar ist, um die Antriebsbaugruppe 1 schwenkbar zu lagern.

Andererseits ist die Antriebsbaugruppe 1 über einen Haltebereich 18 des Antriebsträgers 10 mit dem Querrohr Q verbunden. Hierdurch wird bei einer Schwenkbewegung der Antriebsbaugruppe 1 bezüglich der Schienenlängsführung O, U bzw. des hieran angeordneten Lagerbauteiles 3 die Position des Querrohrs Q relativ zu der Schienenlängsführung O, U verstellt. Zur Erzeugung einer solchen Schwenkbewegung steht das im Ausführungsbeispiel als ein Zahnrad ausgebildete abtriebsseitige Verstellteil 14 der Antriebsbaugruppe 1 mit einer Längsverzahnung 24 in Verzahnungseingriff, die an einem Bauelement in Form eines Verzahnungsbauteiles 2 ausgebildet ist. (Das Verstellteil 14 durchgreift hierfür eine Öffnung 16 in dem Antriebsträger 10.)

Wird das Verzahnungsbauteil 2 fest mit dem Lagerbauteil 3 (und hierüber mit der Oberschiene O der Schienenlängsführung O, U) verbunden, so wird die für den vorbeschriebenen Verstellvorgang erforderliche Schwenkbewegung der Antriebsbaugruppe 1 dadurch ausgelöst, dass im Betrieb des Antriebsmotors 11 das abtriebsseitige Antriebselement 14 der Antriebsbaugruppe 1 mit der Längsverzahnung 24 des Verzahnungsbauteiles 2 zusammenwirkt. Eine derartige Verstellvorrichtung ist im Detail in der DE 10 2010 063 972 A1 beschrieben, worauf hier für weitere Einzelheiten Bezug genommen wird.

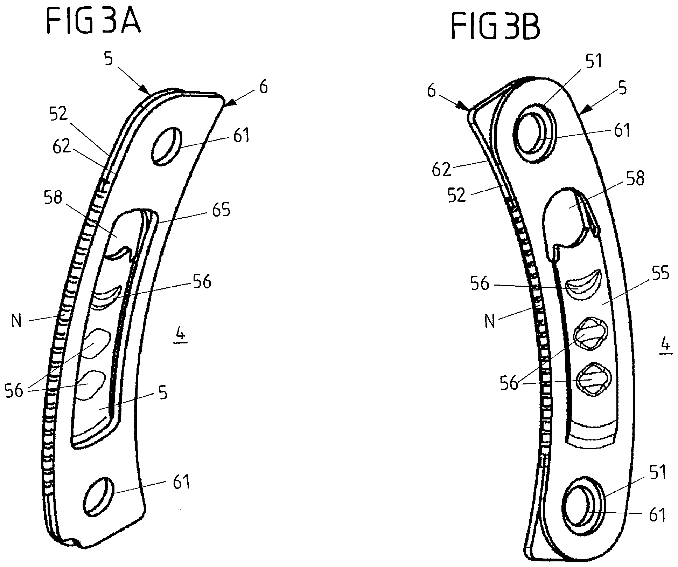

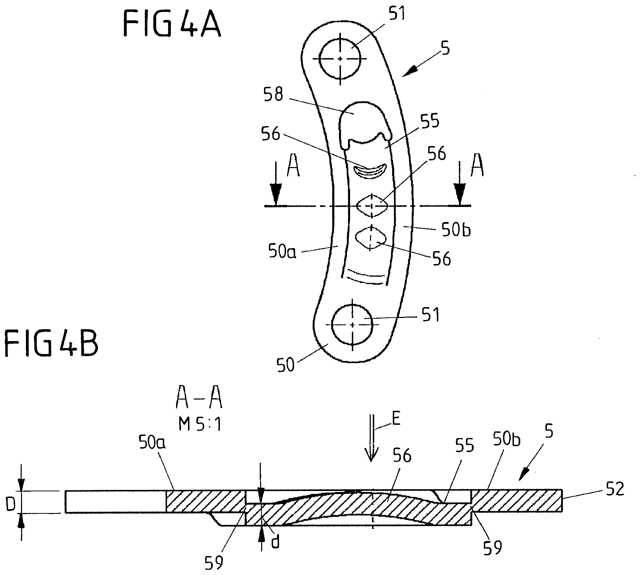

Vorliegend geht es insbesondere um die Integration eines Deformationselementes 4 in eine derartige Verstellvorrichtung, was nachfolgend weiterhin anhand der Figuren 1A bis 2C unter ergänzender Bezugnahme auf die Figuren 3A bis 3C sowie 4A und 4B beschrieben werden wird.

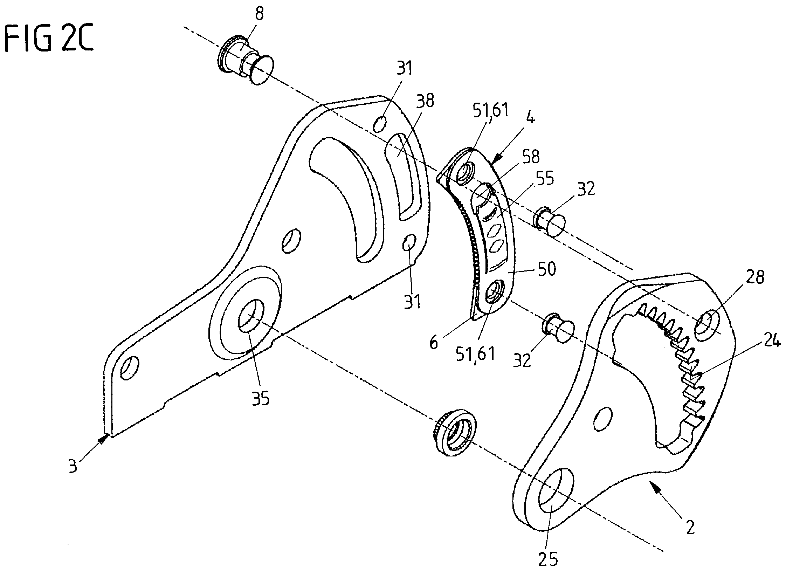

Wie anhand der Figuren 1B und 2C erkennbar, ist das Verzahnungsbauteil 2 an zwei Verbindungsstellen mit dem Lagerbauteil 3 verbunden, so dass eine drehfeste Verbindung besteht. Die Verbindung erfolgt einerseits dadurch, dass das Verzahnungsbauteil 2 über eine Lagerstelle 25 an dem Schwenklager gelagert ist, welches durch das antriebsbaugruppenseitige Lagerelement 15 und die lagerbauteilseitige Lagerstelle 35 definiert ist. Konkret ist das Verzahnungsbauteil 2 über eine Lagerstelle 25 in Form einer Lageröffnung zwischen dem antriebsbaugruppenseitigen Lagerelement 15 und der lagerbauteilseitigen Lagerstelle 35 aufgenommen. Diese Verbindung für sich genommen würde eine Schwenkbewegung des Verzahnungsbauteiles 2 bezüglich des Lagerbauteiles 3 gestatten.

Das Verzahnungsbauteil 2 ist jedoch dadurch drehfest am Lagerbauteil 3 angeordnet, dass das Verzahnungsbauteil 2 zusätzlich über eine von der Lagerstelle 25 beabstandete Befestigungsstelle 28 mit dem Lagerbauteil 3 verbunden ist. Diese zusätzliche Verbindung erfolgt über ein Befestigungselement 8, z.B. in Form eines Nietes, das das Lagerbauteil 3 durchgreift und in die Befestigungsstelle 28 des Verzahnungsbauteiles 2 in Form einer Befestigungsöffnung eingreift. Das Befestigungselement 8 ist dabei an dem Lagerbauteil 3 durch ein Deformationselement 4 aufgenommen.

Das Deformationselement 4 ist in den Figuren 2A bis 2C als ein Bestandteil der aus dem Verzahnungsbauteil 2, dem Lagerbauteil 3 und dem Deformationselement 4 bestehenden Baugruppe gezeigt, und außerdem in den Figuren 3A bis 3C als ein Einzelteil. Zusätzlich ist in den Figuren 4A und 4B eine Komponente des Deformationselementes 4 in größerem Detail dargestellt.

Das Deformationselement 4 umfasst im Ausführungsbeispiel zwei Komponenten, von denen die eine Komponente als ein Deformationsbauteil 5 und die andere Komponente als ein Trägerbauteil 6 ausgebildet ist.

Das Deformationsbauteil 5 definiert einen Grundkörper 50 des Deformationselementes 4, der flächig erstreckt und von einem umlaufenden äußeren Rand 52 umgeben ist. Der Grundkörper 50 des Deformationselementes 4 bzw. genauer des Deformationsbauteiles 5 ist außerdem mit Befestigungsstellen 51 in Form von Befestigungsöffnungen versehen, über die das Deformationsbauteil 5 am Lagerbauteil 3 bzw. an dort vorgesehenen Befestigungsstellen 31, im Ausführungsbeispiel ebenfalls in Form von Befestigungsöffnungen, befestigbar ist. Hierfür können in Figur 1B angedeutete Befestigungselemente 32 in Form von Nieten verwendet werden.

Das Deformationsbauteil 5 ist vorliegend jedoch nicht als Einzelteil an dem Lagerbauteil 3 festgelegt, sondern vielmehr als Bestandteil einer Baueinheit, die neben dem Deformationsbauteil 5 das Trägerbauteil 6 umfasst und die das Deformationselement 4 bildet. Das Trägerbauteil 6 weist einen flächig erstreckten Grundkörper 60 auf, der von einem umlaufenden äußeren Rand 62 begrenzt ist und der mit Befestigungsstellen 61, hier in Form von Befestigungsöffnungen, versehen ist.

Der Grundkörper 50 und der Deformationsabschnitt 55 des Deformationselementes 4 können insbesondere aus Metall bestehen. Gleiches gilt für das Trägerbauteil 6.

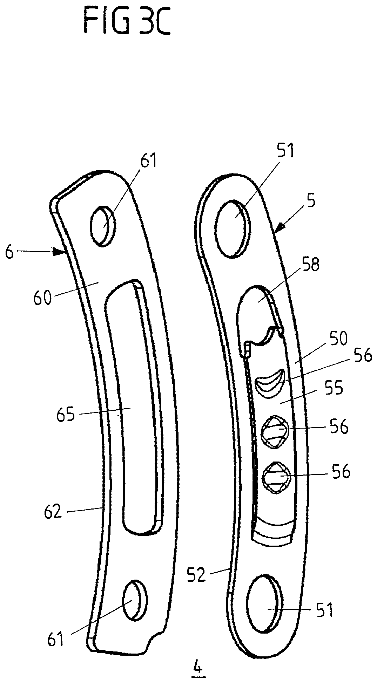

Bei einem bestimmungsgemäßen Zusammenbau der in Figur 3C gezeigten Komponenten (Deformationsbauteil 5 und Trägerbauteil 6) des Befestigungselementes 4, wie in den Figuren 3A und 3B dargestellt, fluchten die beiderseitigen Befestigungsstellen 51, 61 in Form von Befestigungsöffnungen derart, dass die aus dem Deformationsbauteil 5 und dem Trägerbauteil 6 bestehende Baueinheit in Form des Deformationselementes 4 durch die beiderseitigen Befestigungsöffnungen 51, 61 hindurch an dem Lagerbauteil 3 befestigbar ist, wie anhand Figur 1B erkennbar.

Weiterhin wird anhand der Figuren 3A und 3B deutlich, dass das Deformationsbauteil 5 und das Trägerbauteil 6 des Deformationselementes 4 mit ihren umlaufenden Rändern 52, 62 gemeinsam einen umlaufenden Rand des Deformationselementes 4 definieren. D. h., sind das Deformationsbauteil 5 und das Trägerbauteil 6 bestimmungsgemäß aufeinandergelegt, wie in den Figuren 3A und 3B gezeigt, so grenzen deren umlaufende äußere Ränder 52, 62 unmittelbar aneinander an.

Dabei sind das Deformationsbauteil 5 und das Trägerbauteil 6 gemäß Figur 3C entlang ihrer umlaufenden Ränder 52, 62 bzw. genauer an ihren umlaufenden Rändern 52, 62, stoffschlüssig, nämlich im Ausführungsbeispiel durch Laserschweißen unter Bildung einer Laserschweißnaht N, verbunden und dadurch zu einer Baueinheit in Form des Deformationselementes 4 zusammengefasst.

Das Deformationsbauteil 5 umfasst neben dem Grundkörper 50 einen einstückig hieran ausgebildeten Deformationsabschnitt 55. Dieser ist, wie insbesondere anhand der Figuren 3C, 4A und 4B deutlich wird, durch abschnittsweises Umformen des Deformationsbauteiles 5 erzeugt. Konkret ist der Deformationsabschnitt 55 gebildet unter Einwirkung auf das Deformationsbauteil 5 mit Druck, z. B. mittels eines Stempels, durch Scherschneiden bzw. Stanzen. In den Figuren 3C, 4A und 4B sind solche Bereiche, an denen das Deformationsbauteil 5 zur Bildung des Deformationsabschnittes 55 gezielt umgeformt bzw. verformt worden ist, jeweils als Verformungsbereiche 56 (in Form von Sicken) gezeigt, von denen im Ausführungsbeispiel zwei rautenförmig und einer sichelförmig ausgebildet ist. Durch die Geometrie der Verformungsbereiche 56 lässt sich der Faltverlauf des Deformationsabschnittes 55 im Crash-Fall steuern. An den Verformungsbereichen 56, welche den Deformationsabschnitt 55 definieren, steht dieser jeweils quer zu der Fläche, entlang der sich das Deformationsbauteil 5 erstreckt, gegenüber dessen Grundkörper 50 vor. D. h., durch Einwirkung auf das Deformationsbauteil 5 mittels eines Stempels entlang einer Richtung E quer zu der Fläche, entlang der sich das Deformationsbauteil 5 erstreckt, wird das Material des Deformationsbauteiles 5 abschnittsweise so deformiert, dass es entlang der besagten Richtung E über den Grundkörper 50 hinaussteht.

Hierdurch weisen die Verbindungsbereiche 59, über die der (durch Einwirkung eines Stempels bzw. durch Stanzen gebildete) Deformationsabschnitt 55 mit dem Grundkörper 50 des Deformationsbauteiles 5 verbunden ist, eine geringere Dicke (Ausdehnung quer zu der Fläche, entlang der sich das Deformationsbauteil 5 erstreckt) auf als der Grundkörper 50 sowie der Deformationsabschnitt 55. Letztere haben im Ausführungsbeispiel eine identische Dicke D = d. Dabei sind die Verbindungsbereiche 59 hier als Scherkanten ausgebildet, die bei der Formung des Deformationsabschnittes 55 durch Einwirkung eines Stempels, also insbesondere durch Stanzen bzw. Scherschneiden, erzeugt werden.

An jenen Verbindungsbereichen 59 wird der Deformationsabschnitt 55 des Deformationselementes 4 schwerpunkmäßig deformiert bzw. zerstört, wenn hierin eine externe Kraft eingeleitet wird. Hierbei kann es sich insbesondere um Kräfte handeln, die in einem Crash-Fall am Fahrzeugsitz wirken und die über das Befestigungselement 8 eingeleitet werden. Mit anderen Worten ausgedrückt definieren die Verbindungsbereiche 59 einen Schwächungsbereich (in Form mindestens einer Reißlinie), entlang dem das Deformationselement 4 bei Einwirkung einer äußeren Kraft schwerpunktmäßig aufreißt.

Zur Einleitung einer an der Verstelleinrichtung wirkenden Kraft in das Deformationselement 4, genauer in dessen Deformationsabschnitt 55, dient ein Krafteinleitungsbereich 58, der im Ausführungsbeispiel als eine Öffnung im Deformationselement 4 bzw. im Deformationsbauteil 5 ausgeführt ist. In den Krafteinleitungsbereich 58 in Form einer Öffnung greift das Verzahnungsbauteil 2 mit dem Befestigungselement 8 ein, das zur Befestigung des Verzahnungsbauteiles 2 am Lagerbauteil 3 dient. Die Befestigung erfolgt dabei vorliegend in der Weise, dass das Befestigungselement 8 einerseits, aufseiten des Verzahnungsbauteiles 2, an einer Befestigungsstelle 28, hier in Form einer Befestigungsöffnung, festgelegt ist, und andererseits, aufseiten des Lagerbauteiles 3, in einer Kulisse 38 geführt ist, wobei das Befestigungselement 8 dadurch definiert am Lagerbauteil 3 positioniert und gehalten wird, dass dieses in dem Krafteinleitungsbereich 58 des am Lagerbauteil 3 festgelegten Deformationselementes 4 aufgenommen ist.

Der Krafteinleitungsbereich 58 grenzt am Deformationselement 4 bzw. dessen Deformationsbauteil 5 unmittelbar an den Deformationsabschnitt 55, so dass am Verzahnungsbauteil 2 wirkende Crash-Kräfte - je nach Richtung der Kraft - über das Befestigungselement 8 unmittelbar in den Deformationsabschnitt 55 eingeleitet werden können. Der Deformationsabschnitt 55 erstreckt sich im Ausführungsbeispiel in Längsrichtung zwischen zwei seitlichen Bereichen 50a, 50b des Grundkörpers 50. Und der Krafteinleitungsbereich 58 liegt ebenfalls zwischen jenen beiden seitlichen Bereichen 50a, 50b des Grundkörpers 50, unmittelbar angrenzend an den Deformationsabschnitt 55.

Anhand der Figuren 2A bis 2C und 3A bis 3C ist erkennbar, dass sich am Trägerbauteil 6 eine als Langloch ausgeführte Durchgangsöffnung 65 derart erstreckt, dass diese entlang des Deformationsbereiches 55 und des Krafteinleitungsbereiches 58 verläuft, wenn das Deformationsbauteil 5 und das Trägerbauteil 6 bestimmungsgemäß miteinander verbunden sind, wie in den Figuren 3A und 3B dargestellt.

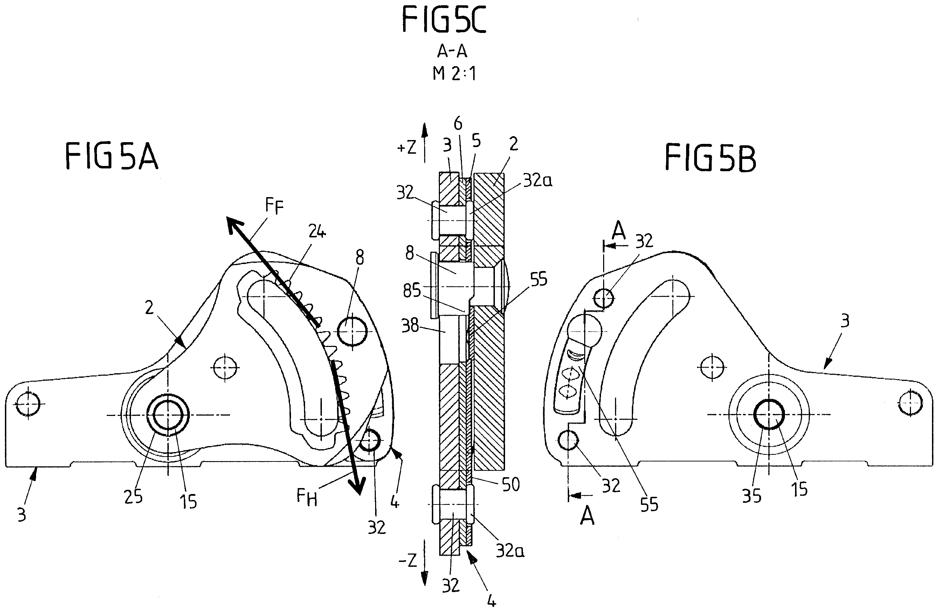

Gemäß den Figuren 5A bis 5C ist an dem Befestigungselement 8, welches der Befestigung des Verzahnungsbauteiles 2 am Lagerbauteil 3 über das Deformationselement 4 dient und welches im Ausführungsbeispiel als ein Niet ausgeführt ist, ein Klemmbereich 85, hier in Form einer Schulter, ausgebildet, mit dem der (etwas vorstehende) Deformationsabschnitt 55 des Deformationselementes 4 gegen das Verzahnungsbauteil 2 gedrückt wird. Hierdurch kann Spiel in dem System eliminiert werden. Der Grundkörper 50 des Deformationselementes 4 ist demgegenüber von dem Verzahnungsbauteil 2 geringfügig beabstandet, liegt also nicht an diesem an, weil mindestens ein Kopf 32a der Befestigungselemente 32, über die das Deformationselement 4 bzw. dessen Grundkörper 50 am Lagerbauteil 3 befestigt ist, das Verzahnungsbauteil 2 derart abstützen, dass ein geringfügiger Abstand zwischen dem Verzahnungsbauteil 2 und dem Grundkörper 50 des Deformationselementes 4 eingehalten wird.

Weiterhin sind die Kulisse 38 am Lagerbauteil 3 einerseits und der Deformationsabschnitt 55 am Deformationselement 4 andererseits jeweils so ausgebildet und so zueinander angeordnet, dass am Verzahnungsbauteil 2 angreifende Crash-Kräfte - je nach Kraftrichtung - entweder direkt in das Lagerbauteil 3 übertragen werden oder zunächst auf den Deformationsabschnitt 55 des Deformationselementes 4 eingeleitet werden. Gemäß der Querschnittsdarstellung in Figur 5C haben an dem Verzahnungsbauteil 2 wirkende Kräfte mit einer Kraftrichtung +z vertikal nach oben zur Folge, dass eine Krafteinleitung vom Verzahnungsbauteil 2 über das Befestigungselement 8 unmittelbar in das Lagerbauteil 3 erfolgt. Denn entlang jener Richtung +z stützt sich das Befestigungselement 8 unmittelbar an dem Lagerbauteil 3, nämlich am oberen Rand von dessen Kulisse 38, ab.

In entgegengesetzter Richtung -z stützt sich das Befestigungselement 8 demgegenüber nicht unmittelbar am Lagerbauteil 3 ab, weil es entlang jener Richtung vom Rand der Kulisse 38 beabstandet ist. Vielmehr erfolgt entlang der Richtung -z eine Abstützung am Deformationsabschnitt 55 des Deformationselementes 5. Kommt es daher zu einem Unfall aufgrund dessen an dem Verzahnungsbauteil 2 substantielle Crash-Kräfte entlang der besagten Richtung -z wirken, so führt dies (durch Einwirkung des Befestigungselementes 8 auf den Deformationsabschnitt 55) zu einer Deformation sowie zu einem Einreißen des Deformationselementes 4 im Deformationsabschnitt 55, insbesondere an den Schwachstellen in Form der Verbindungsbereiche 59 (Scherkanten). Hierdurch wird einerseits kinetische Energie abgebaut bzw. in Wärme und Deformationsenergie umgewandelt; und andererseits kommt es zu einer gezielten Bewegung des Verzahnungsbauteiles 2 nach unten (entlang der Richtung -z), wobei die hiermit in Eingriff stehende Antriebsbaugruppe 1 sowie als Folge hiervon das Querrohr Q und der Sitz- bzw. Polsterträger T mitgenommen werden. Hierdurch lässt sich eine gezielte Positionierung der besagten Baugruppen in einem Crash-Fall erreichen, mit der das Verletzungsrisiko eines Fahrzeuginsassen reduziert werden kann.

Ausgehend von der in den Figuren 1A und 1B gezeigten Anordnung der betrachteten Verstelleinrichtung in einem Kraftfahrzeugsitz treten bei einem Frontaufprall (Front-Crash) die in Figur 5A mit F_{F} bezeichneten Kräfte am Verzahnungsbauteil 2 auf, während bei einem Heckaufprall (Heck-Crash) am Verzahnungsbauteil 2 die mit F_{H} bezeichneten Kräfte wirken. Während die erstgenannten Kräfte F_{F} gemäß einer Zusammenschau der Figuren 5A und 5C vom Verzahnungsbauteil 2 über das Befestigungselement 8 unmittelbar in das Lagerbauteil 3 eingeleitet werden, kommt es unter der Wirkung der zweitgenannten Kräfte F_{H} zu einer Krafteinleitung vom Verzahnungsbauteil 2 über das Befestigungselement 8 in den Deformationsabschnitt 55 des Deformationselementes 4. Dieses ist somit insbesondere bei einem Heckaufprall zum Abbau kinetischer Energie sowie für eine definierte Absenkung des Sitzträgers wirksam, um das Verletzungsrisiko eines Sitzbenutzers, insbesondere im Hals- und Nackenbereich, zu minimieren.

Bei dem anhand der Figuren 1A bis 5C dargestellten Ausführungsbeispiel ist das Deformationselement 4 in eine Verstelleinrichtung integriert, mit der während einer Verstellbewegung die Antriebsbaugruppe 1 gemeinsam mit der zu verstellenden Sitzbaugruppe Q, T bewegt wird, während das zugeordnete Verzahnungsbauteil 2, mit dem die Antriebsbaugruppe 1 zusammenwirkt, im Verstellbetrieb ortsfest (am Lagerbauteil 3) angeordnet ist. Alternativ kann das Deformationselement 4 in eine Verstelleinrichtung integriert werden, die eine im Verstellbetrieb ortsfeste Antriebsbaugruppe aufweist, welche mit einem im Verstellbetrieb zu bewegenden Verzahnungsbauteil 2 zusammenwirkt.

Weiterhin ist bei dem vorbeschriebenen Ausführungsbeispiel das Deformationselement 4 derart in die Sitzverstelleinrichtung integriert und dort zwischen einem Lagerbauteil 3 und einem Verzahnungsbauteil 2 angeordnet, das für einen Austausch des Deformationselementes 4, z. B. nach einem Unfall, bei dem das Deformationselement 4 deformiert wurde, die Verstelleinrichtung teilweise auseinandergebaut werden muss.

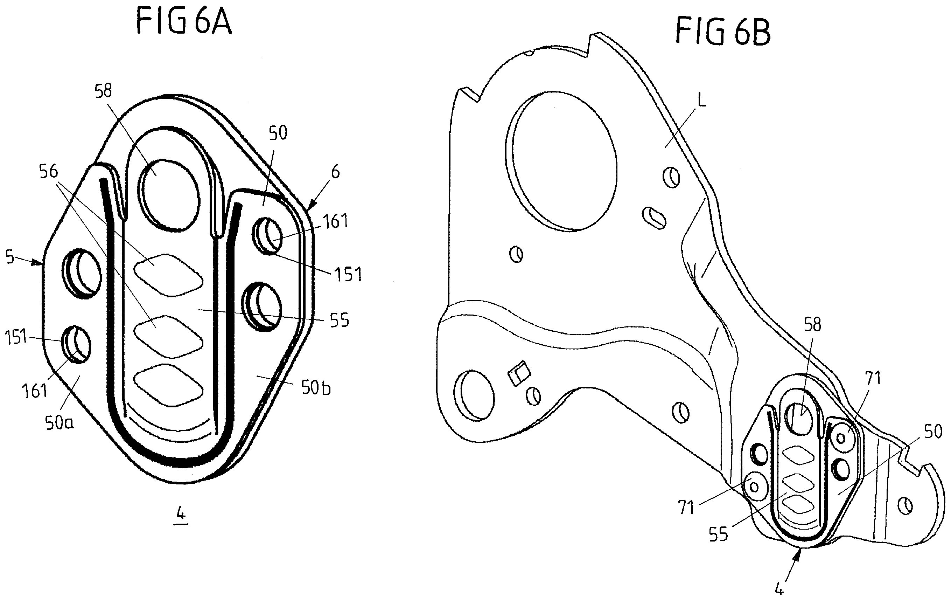

In den Figuren 6A und 6B ist eine weitere Ausführungsform eines in einem Kraftfahrzeugsitz einzusetzenden Deformationselementes 4 dargestellt. Dieses stimmt hinsichtlich des grundsätzlichen Aufbaus mit der anhand der Figuren 1A bis 5C beschriebenen Ausführungsform überein. So umfasst auch hier das Deformationselement 4 einen Grundkörper 50 und einen hieran durch Umformen, insbesondere Scherschneiden (Stanzen) ausgebildeten Deformationsabschnitt 55. Der Grundkörper 50 und der Deformationsabschnitt 55 bilden ein Deformationsbauteil 5, welches mit einem Trägerbauteil 6 (z. B. durch Laserschweißen) stoffschlüssig verbunden ist, so dass das Deformationselement 4 durch die aus dem Deformationsbauteil 5 und dem Trägerbauteil 6 gebildeten Baueinheit gebildet wird. An den Deformationsbereich 55 angrenzend ist wiederum ein Krafteinleitungsbereich 58 in Form einer Öffnung ausgebildet, um in einem Crash-Fall am Sitz auftretende Kräfte in den Deformationsabschnitt 55 einleiten zu können. Letzterer ist dabei wiederum seitlich durch Bereiche 50a, 50b des Grundkörpers 50 begrenzt.

Ein Unterschied in der Ausgestaltung des Deformationselementes 4 aus den Figuren 6A und 6B, verglichen mit dem Deformationselement aus den Figuren 1A bis 5C, besteht darin, dass gemäß den Figuren 6A und 6B die Befestigungsstellen 151, 161, über die das Deformationselement 4 an einer Sitzkomponente zu befestigen ist, am Grundkörper 50 neben den Längsseiten des Deformationsabschnittes 55 angeordnet sind und nicht (wie im Fall der Figuren 1A bis 5C) entlang der Erstreckungsrichtung des Deformationsabschnittes 55 oberhalb und unterhalb von diesem.

Ein weiterer Unterschied besteht darin, dass gemäß den Figuren 6A und 6B das Deformationselement 4 nicht in eine elektromotorisch angetriebene Sitzverstelleinrichtung integriert ist, sondern vielmehr an einem Bauelement in Form einer Komponente L der Sitzlehne eines Kraftfahrzeugsitzes angeordnet ist. Bei jener Komponente L handelt es sich im Ausführungsbeispiel um einen Lehnenadapter, über den eine Sitzlehne mit einem Lehnenbeschlag zur Einstellung der Lehnenneigung koppelbar ist. Dabei ist das Deformationselement 4 gemäß den Figuren 6A und 6B an seinen Befestigungsstellen 151, 161 in Form von Befestigungsöffnungen mittels Befestigungselementen 71 an der Sitzkomponente L festgelegt. Wird an jener Sitzkomponente L in Form eines Lehnenadapters ein Lehnengestell befestigt, wobei der Krafteinleitungsbereich 58 des Deformationselementes 4 als eine Befestigungsstelle dient, so können in einem Crash-Fall hieran wirkende Kräfte in das Deformationselement 4 und insbesondere in dessen Deformationsabschnitt 55 eingeleitet werden.

Das in den Figuren 6A und 6B dargestellte Deformationselement 4 lässt sich nach einer Verformung in einem Crash-Fall in einfacher Weise austauschen, also durch ein neues Deformationselement ersetzen.

## Patentansprüche

1. Sitzbaugruppe eines Kraftfahrzeugsitzes mit einem Deformationselement, das in eine Sitzverstelleinrichtung integriert ist und folgendes umfasst:
- einen Grundkörper (50),
- einen an dem Grundkörper (50) ausgebildeten Deformationsabschnitt (55), an dem das Deformationselement (4) bei Einwirkung einer äußeren Kraft deformierbar und/oder zerstörbar ist, und
- einen Krafteinleitungsbereich (58), mit dem ein Bauelement (2, 8) in Form eines Verstellelementes der Sitzverstelleinrichtung in Eingriff steht und über den das Bauelement (2, 8) mit dem Deformationsabschnitt (55) in Wirkverbindung bringbar ist, so dass eine an jenem Bauelement (2, 8) wirkende Kraft über den Krafteinleitungsbereich (58) in den Deformationsabschnitt (55) eingeleitet werden kann,
wobei der Deformationsabschnitt (55) durch abschnittsweises Umformen des Materials des Deformationselementes (4) gebildet ist und am Übergang des Deformationsabschnittes (55) zum Grundkörper (50) des Deformationselementes (4) ein Schwächungsbereich (59) vorliegt, der mindestens eine Reißlinie definiert, entlang der das Deformationselement (4) bei Einwirkung einer äußeren Kraft aufreißen kann, und
wobei der Grundkörper (50) des Deformationselementes (4) stoffschlüssig mit einem Trägerbauteil (6) verbunden ist und gemeinsam mit diesem an der Sitzbaugruppe festgelegt ist,
**dadurch gekennzeichnet,**
**dass** das Deformationselement (4) an einem Lagerbauteil (3) der Sitzverstelleinrichtung festgelegt ist und dabei zwischen dem Lagerbauteil (3) und dem Bauelement (2, 8) in Form eines Verstellelementes aufgenommen ist und dass das Bauelement (2, 8) bei einer Deformation und/oder Zerstörung des Deformationsabschnittes (55) entlang des Deformationsabschnittes (55) bewegbar ist.

2. Sitzbaugruppe nach Anspruch 1, **dadurch gekennzeichnet, dass** der Deformationsabschnitt (55) durch abschnittsweises Umformen des Materials des Deformationselementes (4) unter Druckeinwirkung gebildet ist.

3. Sitzbaugruppe nach Anspruch 1 oder 2, **dadurch gekennzeichnet, dass** der Deformationsabschnitt (55) durch Scherschneiden gebildet ist.

4. Sitzbaugruppe nach Anspruch 3, **dadurch gekennzeichnet, dass** der Deformationsabschnitt (55) durch Stanzen gebildet ist.

5. Sitzbaugruppe nach einem der vorhergehenden Ansprüche, **dadurch gekennzeichnet, dass** der Deformationsabschnitt (55) zur Bildung des Schwächungsbereiches (59) mit dem Grundkörper (50) des Deformationselementes (4) zumindest teilweise über einen Verbindungsbereich verbunden ist, dessen Dicke geringer ist als die Dicke (D) des Deformationsabschnittes (55) benachbart zu dem Verbindungsbereich.

6. Sitzbaugruppe nach Anspruch 5, **dadurch gekennzeichnet, dass** der Deformationsabschnitt (55) zur Bildung des Schwächungsbereiches (59) mit dem Grundkörper (50) des Deformationselementes (4) außerhalb des Krafteinleitungsbereiches (58) über einen Verbindungsbereich verbunden ist, dessen Dicke geringer ist als die Dicke (D) des Deformationsabschnittes (55) benachbart zu dem Verbindungsbereich.

7. Sitzbaugruppe nach Anspruch 3 und 5 oder 6, **dadurch gekennzeichnet, dass** der Verbindungsbereich (59) als eine Scherkante ausgebildet ist.

8. Sitzbaugruppe nach einem der vorhergehenden Ansprüche, **dadurch gekennzeichnet, dass** der Grundkörper (50) des Deformationselementes (4) flächig erstreckt ausgeführt ist und durch einen umlaufenden äußeren Rand (52) begrenzt ist.

9. Sitzbaugruppe nach einem der vorhergehenden Ansprüche, **dadurch gekennzeichnet, dass** der Grundkörper (50) des Deformationselementes (4) durch Schweißen mit dem Trägerbauteil (6) verbunden ist.

10. Sitzbaugruppe nach Anspruch 9, **dadurch gekennzeichnet, dass** der Grundkörper (50) des Deformationselementes (4) durch Laserschweißen mit dem Trägerbauteil (6) verbunden ist.

11. Sitzbaugruppe nach einem der vorhergehenden Ansprüche, **dadurch gekennzeichnet, dass** das Trägerbauteil (6) flächig erstreckt ausgeführt ist und durch einen umlaufenden äußeren Rand (62) begrenzt ist.

12. Sitzbaugruppe nach Anspruch 8 und 11, **dadurch gekennzeichnet, dass** der Grundkörper (50) und das Trägerbauteil (6) an ihrem jeweiligen äußeren Rand (52, 62) stoffschlüssig miteinander verbunden sind.

13. Sitzbaugruppe nach einem der vorhergehenden Ansprüche, **dadurch gekennzeichnet, dass** sich eine Öffnung (65) in dem Trägerbauteil (6) entlang des Deformationsabschnittes (55) des Deformationselementes (4) erstreckt.

14. Sitzbaugruppe nach einem der vorhergehenden Ansprüche, **dadurch gekennzeichnet, dass** der Deformationsabschnitt (55) quer zu der Fläche, entlang welcher sich das Deformationselement (4) erstreckt, über dessen Grundkörper (50) hinausragt.

15. Sitzbaugruppe nach einem der vorhergehenden Ansprüche, **dadurch gekennzeichnet, dass** der Grundkörper (50) und der Deformationsabschnitt (55) des Deformationselementes (4) im Wesentlichen die gleiche Dicke (D = d) aufweisen.

16. Sitzbaugruppe nach einem der vorhergehenden Ansprüche, **dadurch gekennzeichnet, dass** der Kraftübertragungsbereich (58) durch eine Öffnung im Deformationselement (4) gebildet wird.

17. Sitzbaugruppe nach einem der vorhergehenden Ansprüche, **dadurch gekennzeichnet, dass** der Kraftübertragungsbereich (58) unmittelbar an den Deformationsabschnitt (55) des Deformationselementes (4) angrenzt.

18. Sitzbaugruppe nach einem der vorhergehenden Ansprüche, **dadurch gekennzeichnet, dass** das Deformationselement (4) in eine Sitzhöhenverstellung integriert ist.

## Claims

1. A seat subassembly of a motor vehicle seat having a deformation element which is integrated in a seat adjustment device and which comprises the following:
- a base member (50),
- a deformation portion (55) which is formed on the base member (50) and on which the deformation element (4) can be deformed and/or destroyed under the action of an external force, and
- a force introduction region (58) with which a structural element (2, 8) in the form of an adjustment element of the seat adjustment device is in engagement and by means of which the structural element (2, 8) can be brought into operational connection with the deformation portion (55) so that a force acting on that structural element (2, 8) can be introduced via the force introduction region (58) into the deformation portion (55),
wherein the base member (50) of the deformation element (4) is connected to a carrier component (6) in a materially engaging manner and is intended to be secured together therewith to a subassembly of a motor vehicle seat
**characterized in that**
the deformation element (4) is secured to a bearing component (3) of the seat adjustment device and is received between the bearing component (3) and the structural element (2, 8) in the form of an adjustment element and **in that** the structural element (2, 8) in the event of a deformation and/or destruction of the deformation portion (55) can be moved along the deformation portion (55).

2. The seat subassembly as claimed in claim 1, **characterized in that** the deformation portion (55) is formed by means of partial deformation of the material of the deformation element (4) under the action of pressure.

3. The seat subassembly as claimed in claim 1 or claim 2, **characterized in that** the deformation portion (55) is formed by means of shearing.

4. The seat subassembly as claimed in claim 3, **characterized in that** the deformation portion (55) is formed by means of punching.

5. The seat subassembly as claimed in one of the preceding claims, **characterized in that** the deformation portion (55) in order to form the weakening region (59) with the base member (50) of the deformation element (4) is at least partially connected by means of a connection region whose thickness is less than the thickness (D) of the deformation portion (55) adjacent to the connection region.

6. The seat subassembly as claimed in claim 5, **characterized in that** the deformation portion (55) in order to form the weakening region (59) with the base member (50) of the deformation element (4) is connected outside the force introduction region (58) by means of a connection region whose thickness is less than the thickness (D) of the deformation portion (55) adjacent to the connection region.

7. The seat subassembly as claimed in claim 3 and 5 or 6, **characterized in that** the connection region (59) is constructed as a shearing edge.

8. The seat subassembly as claimed in one of the preceding claims, **characterized in that** the base member (50) of the deformation element (4) is constructed so as to extend in a planar manner and is delimited by a peripheral outer edge (52).

9. The seat subassembly as claimed in one of the preceding claims, **characterized in that** the base member (50) of the deformation element (4) is connected to the carrier component (6) by means of welding.

10. The seat subassembly as claimed in claim 9, **characterized in that** the base member (50) of the deformation element (4) is connected to the carrier component (6) by means of laser welding.

11. The seat subassembly as claimed in one of the preceding claims, **characterized in that** the carrier component (6) is constructed so as to extend in a planar manner and is delimited by a peripheral outer edge (62).

12. The seat subassembly as claimed in claim 8 and 11, **characterized in that** the base member (50) and the carrier component (6) are connected to each other at the respective outer edge (52, 62) thereof in a materially engaging manner.

13. The seat subassembly as claimed in one of the preceding claims, **characterized in that** an opening (65) in the carrier component (6) extends along the deformation portion (55) of the deformation element (4).

14. The seat subassembly as claimed in one of the preceding claims, **characterized in that** the deformation portion (55) protrudes beyond the base member (50) thereof transversely relative to the face along which the deformation element (4) extends.

15. The deformation element as claimed in one of the preceding claims, **characterized in that** the base member (50) and the deformation portion (55) of the deformation element (4) have substantially the same thickness (D = d).

16. The seat subassembly as claimed in one of the preceding claims, **characterized in that** the force transmission region (58) is formed by an opening in the deformation element (4).

17. The deformation element as claimed in one of the preceding claims, **characterized in that** the force transmission region (58) is directly adjacent to the deformation portion (55) of the deformation element (4).

18. The seat subassembly as claimed in one of the preceding claims, **characterized in that** the deformation element (4) is integrated in a seat height adjustment unit.

## Revendications

1. Ensemble de siège d'un siège de véhicule automobile avec un élément de déformation, qui est intégré dans un dispositif de réglage de siège et comporte ce qui suit :
- un corps de base (50),
- une section de déformation (55) réalisée au niveau du corps de base (50), au niveau de laquelle l'élément de déformation (4) peut être déformé et/ou détruit sous l'action d'une force extérieure, et
- une zone d'introduction de force (58) avec laquelle un élément structurel (2, 8) sous la forme d'un élément de réglage du dispositif de réglage de siège est en prise et par le biais de laquelle l'élément structurel (2, 8) peut être amené en liaison active avec la section de déformation (55) de sorte qu'une force agissant au niveau de cet élément structurel (2, 8) puisse être introduite par le biais de la zone d'introduction de force (58) dans la section de déformation (55),
dans lequel la section de déformation (55) est formée par déformation par section du matériau de l'élément de déformation (4) et au niveau de la transition de la section de déformation (55) vers le corps de base (50) de l'élément de déformation (4) est présente une zone d'affaiblissement (59), laquelle définit au moins une ligne de rupture, le long de laquelle l'élément de déformation (4) peut se rompre sous l'action d'une force extérieure, et
dans lequel le corps de base (50) de l'élément de déformation (4) est relié par liaison de matière à un composant de support (6) et est fixé conjointement avec celui-ci au niveau de l'ensemble de siège,
**caractérisé en ce**
**que** l'élément de déformation (4) est fixé à un composant de palier (3) du dispositif de réglage de siège et est logé entre le composant de palier (3) et l'élément structurel (2, 8) sous la forme d'un élément de réglage et que l'élément structurel (2, 8) peut être déplacé lors d'une déformation et/ou destruction de la section de déformation (55) le long de la section de déformation (55).

2. Ensemble de siège selon la revendication 1, **caractérisé en ce que** la section de déformation (55) est formée par déformation par section du matériau de l'élément de déformation (4) sous l'action de la pression.

3. Ensemble de siège selon la revendication 1 ou 2, **caractérisé en ce que** la section de déformation (55) est formée par cisaillage.

4. Ensemble de siège selon la revendication 3, **caractérisé en ce que** la section de déformation (55) est formée par estampage.

5. Ensemble de siège selon l'une des revendications précédentes, **caractérisé en ce que** la section de déformation (55) est reliée pour la formation de la zone d'affaiblissement (59) au corps de base (50) de l'élément de déformation (4) au moins partiellement par le biais d'une zone de liaison, dont l'épaisseur est inférieure à l'épaisseur (D) de la section de déformation (55) contiguë à la zone de liaison.

6. Ensemble de siège selon la revendication 5, **caractérisé en ce que** la section de déformation (55) est reliée pour la formation de la zone d'affaiblissement (59) au corps de base (50) de l'élément de déformation (4) en dehors de la zone d'introduction de force (58) par le biais d'une zone de liaison, dont l'épaisseur est inférieure à l'épaisseur (D) de la section de déformation (55) contiguë à la zone de liaison.

7. Ensemble de siège selon la revendication 3 et 5 ou 6, **caractérisé en ce que** la zone de liaison (59) est réalisée en tant qu'arête de cisaillement.

8. Ensemble de siège selon l'une des revendications précédentes, **caractérisé en ce que** le corps de base (50) de l'élément de déformation (4) est réalisé de manière étendue sur la surface et est délimité par un bord (52) extérieur périphérique.

9. Ensemble de siège selon l'une des revendications précédentes, **caractérisé en ce que** le corps de base (50) de l'élément de déformation (4) est relié par soudage au composant de support (6).

10. Ensemble de siège selon la revendication 9, **caractérisé en ce que** le corps de base (50) de l'élément de déformation (4) est relié par soudage au laser au composant de support (6).

11. Ensemble de siège selon l'une des revendications précédentes, **caractérisé en ce que** le composant de support (6) est réalisé de manière étendue sur la surface et est délimité par un bord (62) extérieur périphérique.

12. Ensemble de siège selon les revendications 8 et 11, **caractérisé en ce que** le corps de base (50) et le composant de support (6) sont reliés l'un à l'autre par liaison de matière au niveau de leur bord (52, 62) extérieur respectif.

13. Ensemble de siège selon l'une des revendications précédentes, **caractérisé en ce qu'**une ouverture (65) s'étend dans le composant de support (6) le long de la section de déformation (55) de l'élément de déformation (4).

14. Ensemble de siège selon l'une des revendications précédentes, **caractérisé en ce que** la section de déformation (55) dépasse transversalement à la surface le long de laquelle l'élément de déformation (4) s'étend, par le biais de son corps de base (50).

15. Ensemble de siège selon l'une des revendications précédentes, **caractérisé en ce que** le corps de base (50) et la section de déformation (55) de l'élément de déformation (4) présentent sensiblement la même épaisseur (D = d).

16. Ensemble de siège selon l'une des revendications précédentes, **caractérisé en ce que** la zone de transmission de force (58) est formée par une ouverture dans l'élément de déformation (4).

17. Ensemble de siège selon l'une des revendications précédentes, **caractérisé en ce que** la zone de transmission de force (58) est contiguë directement à la section de déformation (55) de l'élément de déformation (4).

18. Ensemble de siège selon l'une des revendications précédentes, **caractérisé en ce que** l'élément de déformation (4) est intégré dans un réglage de hauteur de siège.
